(19) Europäisches Patentamt
European Patent Office
Office européen des brevets

(11) **EP 0 691 309 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(51) Int. Cl.$^6$: **C02F 1/68**, C02F 3/32

(21) Anmeldenummer: **94110538.9**

(22) Anmeldetag: **06.07.1994**

(54) **Verfahren und Vorrichtung zur biologischen Reinigung eines Gewässers**

Process and device for the biological purification of a body of water

Procédé et dispositif d'épuration biologique des cours d'eau

(84) Benannte Vertragsstaaten:
**BE CH DE DK ES FR GB GR IE IT LI NL PT SE**
Benannte Erstreckungsstaaten:
**SI**

(43) Veröffentlichungstag der Anmeldung:
**10.01.1996 Patentblatt 1996/02**

(73) Patentinhaber:
**Pogozhev, Peter I., Dr.
Moskau 103001 (RU)**

(72) Erfinder:
**Pogozhev, Peter I., Dr.
Moskau 103001 (RU)**

(74) Vertreter: **Stahl, Gerhard F.W.
Patentanwalt Dipl.-Ing. Gerhard F.W. Stahl
Heilmannstrasse 10
81479 München (DE)**

(56) Entgegenhaltungen:
**DE-U- 9 110 933          US-A- 4 558 534
US-A- 4 824 284**

**Beschreibung**

Die Erfindung betrifft ein Verfahren und eine Vorrichtung zur biologischen Reinigung eines Gewässers.

In einem gesunden Gewässer besteht ein Gleichgewicht zwischen den verschiedenen pflanzlichen und tierischen Lebewesen. Bei den pflanzlichen Lebewesen handelt es sich im wesentlichen um Blaugrünalgen und Grünalgen. Die tierischen Lebewesen lassen sich unterteilen in Zooplankton, beispielsweise Daphnien, Kleinkrebse, in zooplanktonfressende Lebewesen, beispielsweise Jungfische, Insektenlarven, kleine Fische, und in Räuber, beispielsweise Hechte, Barsche, Forellen. Da sich diese Lebewesen voneinander ernähren spricht man auch von einer Nahrungskette oder einem Nahrungskreislauf. Wenn sich eine Gruppe in dieser Nahrungskette übermäßig vermehrt, dann wird das Gleichgewicht gestört. Eine solche Störung des Gleichgewichts in natürlichen Gewässern kann beispielsweise durch eine übermäßige Düngung von landwirtschaftlich genutzten Flächen hervorgerufen werden. Durch das Regenwasser können nämlich Nitrat-, Ammonium- und Phosphatsalze in das Gewässer gelangen, wodurch das Wachstum der Blaugrünalgen und Grünalgen stark ansteigt. Diese rasante Zunahme an Blaugrünalgen und Grünalgen, die auch als Algenblüte bezeichnet wird, ist äußerst unerwünscht, weil sie mit einer Verminderung der Wasserqualität verbunden ist und zu einem Fischsterben wie auch zur Entwicklung von anaeroben Vorgängen führen kann. Eine derartige unmäßige Konzentration an Blaugrünalgen und Grünalgen kann nicht nur in natürlichen Gewässern, sondern auch in Kühlwasseranlagen und anderen künstlich geschaffenen Gewässern eintreten.

Die derzeit bekannten Verfahren zur Lösung dieses Problems führen meistens zu einer vollständigen Zerstörung des Ökosystems des betreffenden Gewässers (z.B. DE-U 9 110 933). Bei industriellen Kühlanlagen wird dieses Problem durch eine Vernichtung sämtlicher Arten von lebenden Organismen gelöst. Eine derartige Lösung scheidet bei natürlichen Gewässern selbstverständlich aus. Bei kleineren natürlichen Gewässern, wie z.B. Bächen oder Teichen, besteht die Möglichkeit, das eutrophierte Wasser abzulassen, den Grund mechanisch zu säubern und anschließend Frischwasser zuzuführen. Dieses Verfahren ist aber nicht nur kostspielig, sondern es ist auch mit einer Zerstörung des Ökosystems des Gewässers verbunden und seine Wiederherstellung dauert mehrere Jahre. Falls sich die Umweltbedingungen des betreffenden Gewässers nicht ändern, dann muß dieser Vorgang auch periodisch wiederholt werden. Biologische Kläranlagen zur Abwasserreinigung beruhen auf der Wirkungsweise der Bioorganismen und sind künstlich geschaffene Ökosysteme. Solche Kläranlagen erfordern aber qualifizierte Arbeitskräfte und einen großen Energieaufwand und ihre Errichtung und ihr Unterhalt ist sehr kostspielig.

Der Erfindung liegt die Aufgabe zugrunde, ein Verfahren und eine Vorrichtung zu schaffen, das bzw. die eine kostengünstige biologische Reinigung eines natürlichen oder künstlichen Gewässers ermöglicht.

Erfindungsgemäß wird diese Aufgabe dadurch gelöst, daß ein Teilvolumen des Gewässers zur Bildung eines Reservats für Zooplankton vom Hauptvolumen des Gewässers abgegrenzt wird, wobei die das Teilvolumen umschließende Begrenzungswand für zooplanktonfressende Lebewesen undurchlässig, jedoch für Zooplankton zumindest teilweise durchlässig ist.

Die Erfindung beruht auf der Erkenntnis, daß Zooplankton ein natürlicher Wasserfilter ist. Wenn sich die Biomasse eines Gewässers infolge Fischfraß verringert, so führt dies zur Eutrophierung (Algenblüte) des Wassers. Um eine derartige Algenblüte zu verhindern, ist es daher erforderlich, das pflanzenfressende Zooplankton vor den zooplanktonfressenden Lebewesen, wie z.B. Jungfische, Insektenlarven, kleine Fische, zu schützen und optimale Bedingungen zu schaffen, damit die Schwebstoffteilchen vom Zooplankton vertilgt werden. Der Kern der Erfindung besteht darin, daß in einem natürlichen oder künstlichen Gewässer ein Reservat für Zooplankton geschaffen wird, das vor zooplanktonfressenden Lebewesen geschützt ist und das sich ungehindert vermehren und in dem Gewässer verbreiten kann. Dieses Reservat bildet daher einen natürlichen Wasserfilter. Die erforderliche Größe eines derartigen Reservats für das Zooplankton richtet sich nach der Tiefe, den Abmessungen und der Art des Gewässers (Bucht, See, Teich oder Meeresaquarium). Dieses Reservat sollte auch in eine solche Tiefe reichen, in der die Vermehrungsaktivität des Zooplanktons am größten ist.

Eine Vorrichtung zur Durchführung des erfindungsgemäßen Verfahrens ist gekennzeichnet durch einen ein Reservat für Zooplankton begrenzenden Behälter, dessen Wände für zooplanktonfressende Lebewesen undurchlässig, für Zooplankton jedoch zumindest teilweise durchlässig sind.

Die Abmessungen des Behälters sollten einen optimalen Mengenzuwachs des Zooplanktons innerhalb desselben gewährleisten. Dabei ist zu berücksichtigen, daß überschüssige Organismen dieses Reservat durch die semipermeablen Behälterwände ungehindert verlassen können und in dem Gewässer als Nahrung für Jungfische, Insektenlarven und andere zooplanktonfressende Lebewesen dienen. Mit der erfindungsgemäßen Vorrichtung kann das Auftreten der unerwünschten Algenblüte in einem Gewässer verhindert werden, die Wasserqualität kann verbessert und der eutrophe Wasserzustand kann abgebaut werden. Die natürliche Reinigungskraft des Zooplanktons ist so stark, daß das Wasser im Inneren des Behälters als Trinkwasser genutzt werden kann.

Die semipermeablen Teile der Wände des Behälters bestehen vorzugsweise aus einem Netz oder Gitter, dessen Maschenweite kleiner ist als die durchschnittliche Größe zooplanktonfressender Lebewesen, aber größer ist als die durchschnittliche Größe der Individuen des Zooplanktons. Das Netz oder Gitter des Behälters hat vorzugsweise eine Maschenweite von 1 bis 1,5 mm.

Die Menge des in dem Behälter enthaltenen Zooplanktons wird einerseits von dessen Vermehrungsrate und andererseits von dessen Abwanderungsrate durch die semipermeablen Wände beeinflußt. Um in dem Behälter einen ausreichenden Bestand an Zooplankton aufrechtzuerhalten ist daher vorgesehen, daß das Verhältnis zwischen dem Volumen des Behälters und der semipermeablen Fläche seiner Wände variabel ist. Diese Forderung läßt sich beispielsweise in der Weise verwirklichen, daß die Fläche der semipermeablen Wände des Behälters variabel ist.

Eine besonders einfache Ausführungsform der erfindungsgemäßen Vorrichtung ist dadurch gekennzeichnet, daß der Behälter aus einem sackartigen Netz besteht, das an einem Auftriebskörper befestigt ist und dessen Raumform veränderbar ist. Durch eine Veränderung der Raumform des sackartigen Netzes ist es möglich, das Verhältnis zwischen dem inneren Volumen und der unveränderlichen Fläche des Netzes zu verändern.

Eine besonders vorteilhafte Ausführungsform der erfindungsgemäßen Vorrichtung ist dadurch gekennzeichnet, daß der Behälter aus einem Korb mit Wänden aus Maschenmaterial besteht, der mit einem für das Zooplankton undurchlässigen Überzug oder Mantel versehen ist, mit dem sich die Wände einstellbar verdecken lassen. Durch entsprechende Einstellung des Überzuges ist es daher möglich, die Fläche der für das Zooplankton durchlässigen Behälterwand zu verändern. Es kann daher das für die jeweiligen Umweltbedingungen optimale Verhältnis zwischen dem Volumen des Behälters, d.h. der Größe des Reservats für das Zooplankton und der für dieses durchlässigen Fläche der Behälterwand eingestellt werden.

Versuche mit der erfindungsgemäßen Vorrichtung haben gezeigt, daß mit einem Behälter von 1 m³ Volumen mehr als 100 m³ Wasser in 24 Stunden gereinigt werden können. Wenn sich beispielsweise in dem Behälter Daphnia longispina mit einer Länge von 1,3 mm und einem Gewicht von 0,1 mg in einer Konzentration von 5 Exemplaren pro ml befinden, dann befinden sich in dem Behälter insgesamt 5.000.000 Exemplare mit einem Gesamtgewicht von 500.000 mg. In einem mesotropen Gewässer kann Zooplankton mit einem Gewicht von 1 mg ca. 200 ml Wasser in 24 Stunden reinigen. Demzufolge kann das in dem Behälter vor Fischfraß geschützte Zooplankton in 24 Stunden 500.000 mg mal 200 ml/1 mg, also 100.000.000 ml oder 100 m³ Wasser reinigen. Mit fünf derartigen Behältern kann daher in 10 Tagen (ca. 240 Stunden) das ganze Volumen eines Gewässers mit einer Oberfläche von 50 mal 50 m und einer durchschnittlichen Tiefe von 2 m gereinigt werden. Derjenige Teil der Wasseroberfläche der von einem zylindrischen Behälter mit einem Durchmesser von 0,6 m eingenommen wird, beträgt nur 0,01% der gesamten Wasseroberfläche.

Nachfolgend wird die Berechnung der optimalen Abmessungen, das heißt des Volumens und der Größe der semipermeablen Oberfläche des Behälters erläutert.

Die Berechnung der Abmessungen des ein Reservat für das Zooplankton bildenden Behälters ist darauf gerichtet, daß eine möglichst große Menge des Zooplanktons pro Zeiteinheit aus dem Behälter in das diesen umgebende Wasser austritt.

Unabhängig von der Form des Behälters sollte das Verhältnis zwischen seinem Volumen W und der Größe der wirksamen Fläche S (d.h. der semipermeablen Wand, durch die das Zooplankton austritt) folgender Gleichung genügen:

$$\frac{W}{S} = 2\,\frac{c}{a} \tag{1}$$

wobei die Konstanten a und c Kenngrößen für den Zustand des jeweiligen Gewässers sind. Diese Kenngrößen werden durch Verarbeitung der aus vorhergehenden Beobachtungen erhaltenen Daten bestimmt, welche auf der Basis eines die Veränderung der in dem Behälter enthaltenen Zooplanktonbiomasse beschreibenden mathematischen Modells erhalten wurden.

Dieses mathematische Modell wird durch folgende Differentialgleichung ausgedrückt:

$$\frac{dz}{dt} = az - \frac{b}{W}z^2 - \frac{cS}{W}z;\ z(0) = z_0;\ t\in[0,T]; \tag{2}$$

Dabei bezeichnet:

t -die Zeit in 24 Stunden Tagen,
z₀ -die anfängliche Masse des Zooplanktons zum Zeitpunkt des Einsetzens des Behälters in ein Wasserbecken (t=0),
z(t) -die Masse des Zooplanktons in dem Behälter zum Zeitpunkt t
S -die semipermeable Oberfläche des Behälters, durch die das Zooplankton in das Wasserbecken austritt,
W - das Volumen des Behälters,

a,b,c -positive Konstanten, die den Lebensraum kennzeichnen, nämlich

a -die Vermehrungsintensität des Zooplanktons im Wasser eines bestimmten Wasserbeckens,
b -die Verringerung der Wachstumsgeschwindigkeit des Zooplanktons infolge der Zunahme der Dichte des Zooplanktons in dem Behälter,
c -die Menge des pro Zeiteinheit aus dem Behälter in das umgebende Wasser entweichenden Zooplanktons.

Eine Analyse der Gleichung (2) zeigt, daß der stationäre Zustand

$$Z_s = \frac{aW}{b} - \frac{cS}{b} \qquad (3)$$

stabil ist. Hieraus ergibt sich, daß für die wirksame Oberfläche S des Behälters folgende Bedingung erfüllt sein muß, wenn in dem Behälter eine Zooplanktonmasse größer Null aufrechterhalten werden soll:

$$Z_s > 0 \text{ oder } \frac{aW}{b} - \frac{cS}{b} > 0 \text{ oder } S < \frac{aW}{c} = S_c$$

der Wert

$$Sc = \frac{aW}{c} \qquad (4)$$

wird dabei als kritische Oberfläche bezeichnet, da bei S=Sc folgt, daß

$$\frac{dz}{dt} = - b \frac{z^2}{W}$$

und die Masse des Zooplanktons in dem Behälter im Lauf der Zeit auf Null absinkt.

Die optimale Produktionsgeschwindigkeit von Zooplankton in dem Behälter wird durch die Wahl einer optimalen wirksamen, das heißt semipermeablen Oberfläche S < Sc verwirklicht. Diese Produktionsgeschwindigkeit q(S) unter stationären Bedingungen wird durch folgenden Ausdruck bestimmt:

$$q(S) = C \frac{S}{W} Z_s$$

hieraus und aus (3) folgt, daß

$$q(S) = \frac{acS}{b} - \frac{c^2 S^2}{Wb}$$

Diese Funtion hat ein Maximum in einem einzigen Punkt

$$S_{opt} = \frac{aW}{2c} \text{ oder } S_{opt} = \frac{Sc}{2} < Sc \qquad (5)$$

Bei dieser optimalen Größe der semipermeablen Fläche des Behälters ist

$$q_{opt} = q(S_{opt}) = \frac{a^2 W}{2b} = a \frac{z_{max}}{2} \qquad (6)$$

wobei $z_{max}$ die maximale Masse des Zooplanktons in dem Behälter eines bestimmten Volumens bei einer wirksamen Oberfläche gleich Null ist, d.h. eine stationäre Lösung der folgenden Gleichung:

$$\frac{dz}{dt} = az - b\frac{z^2}{W}$$

Hieraus ergibt sich, daß bei Nullwachstum

$$z_{max} = \frac{aW}{b}, \text{ wenn } \frac{dz}{dt} = 0 \tag{7}$$

Der optimale Wert für die Masse des Zooplanktons in einem Behälter unter stationären Bedingungen ist

$$z_{opt} = z_s (S_{opt}) = \frac{aW}{b} - \frac{cS_{opt}}{b} = z_{max} (1 - \frac{S_{opt}}{S_c}) = \frac{z_{max}}{2} \tag{8}$$

Aufgrund dieser Ergebnisse können die optimalen Abmessungen eines Behälters berechnet werden.

Bei einem zylindrischen Behälter mit semipermeabler Mantelfläche ergibt sich der Radius R der für Zooplankton undurchlässigen Grundfläche aus dem Verhältnis (1), das aus (5) folgt.

Dazu errechnet man

$$\frac{W}{S} = \frac{\pi R^2 H}{2\pi RH} = \frac{R}{2}$$

wobei H die Höhe des Behälters bezeichnet.

Dann ist

$$R_{opt} = 4\frac{c}{a} \tag{9}$$

Bei einem quaderförmigen Behälter mit seitlicher semipermeabler Fläche wird die Seitenlänge r der für Zooplankton undurchlässigen quadratischen Grundfläche in der gleichen Weise berechnet, d.h.

$$\frac{W}{S} = \frac{r^2 H}{4rH} = \frac{r}{4}$$

dann ist

$$r_{opt} = 8\frac{c}{a} \tag{10}$$

Analog zu den beiden vorstehenden Beispielen können die Abmessungen eines Behälters jeder beliebigen anderen Form berechnet werden. Die weiteren Berechnungen gelten für einen zylindrischen Behälter.

Die Herstellung von Behältern mit Abmessungen, die an das jeweilige konkrete Wasserbecken angepaßt sind, ist jedoch unwirtschaftlich. Aus diesem Grund wird nachfolgend ein zylindrischer Behälter mit unveränderlichem Volumen W und veränderlicher Größe der semipermeablen Wandfläche S besprochen. Dabei gilt:

$$W = \pi R^2 H$$

wobei R den Radius der für Zooplankton undurchlässigen Grundfläche und H die Höhe des Zylinders bezeichnet, die durch die Dicke der Siedlungsschicht des Zooplanktons bestimmt ist, d.h. ein fester Wert von 1,5 bis 2 m. Die wirksame Fläche des Behälters, das heißt die semipermeable Fläche, ergibt sich als

$$S = 2\pi Rh,$$

wobei $h \leq H$ die Höhe der für Zooplankton durchlässigen Zylinderfläche ist. Die übrige Fläche des zylindrischen Behälters

$$2\pi R(H-h)$$

ist für Phytoplankton, d.h. für Blaualgen und Blaugrünalgen durchlässig, für Zooplankton jedoch undurchlässig.

Bei einer solchen Konstruktion ist die Höhe $h$ eines "Fensters" des Behälters ein veränderbarer Parameter, dessen optimaler Wert sich aus (1) ableiten läßt:

$$\frac{W}{S_{opt}} = \frac{2c}{a} \text{ oder } \frac{\pi R^2 H}{2\pi R h_{opt}} = \frac{2c}{a}$$

Demzufolge ist

$$h_{opt} = \frac{Ra}{4c} H$$

und unter Berücksichtigung von (9) folgt, daß

$$h_{opt} = \frac{R}{R_{opt}} H \qquad\qquad 11)$$

Da die Höhe $h$ des "Fensters" d.h. der für Zooplankton durchlässigen Zylinderfläche die Höhe $H$ des Zylinders nicht überschreiten kann, folgt aus (11) daß die Bedingung erfüllt sein muß:

$$R \leq R_{opt} = \frac{4c}{a} \qquad\qquad (12)$$

Bei einem Behälter mit größerem Volumen, d.h., wenn

$$W > \pi R_{opt}^2 H$$

wobei die Höhe $H$ unveränderlich ist (1,5 - 2,0 m), $h_{opt} > H$ ist, kann eine optimale Oberfläche $S$ durch eine wellenförmige Ausbildung der Mantelfläche des Zylinders erreicht werden. Dadurch wird die Herstellung des Behälters allerdings teurer.

Die Bestimmung des Verhältnisses $c/a$ erfolgt aufgrund vorhergehender Untersuchungen des betreffenden Wasserbeckens. Zu diesem Zweck werden zwei Versuchsbehälter mit indentischen Abmessungen $R_e$ und $H_e$ gleichzeitig eingesetzt. Der eine Behälter ist für das Zooplankton undurchlässig, und der zweite Behälter hat ein "Fenster" mit einer Höhe von $h_e < H_e$, beispielsweise $h_e = 0,25 H_e$. Die Höhe $H_e$ des Versuchsbehälters beträgt dabei 2 m, und der Radius $R_e$ beträgt ungefähr 0,6 m, was gewährleistet, daß in dem geschlossenen Versuchsbehälter hinreichend schnell (innerhalb von 3 bis 5 Tagen) die maximale Zooplanktonmasse erreicht wird. Das Wachstum der Zooplanktonmasse in dem undurchlässigen Versuchsbehälter ergibt sich aus der Gleichung (1) für $S=0$:

$$\frac{dz}{dt} = az - b \frac{z^2}{W_e}$$

daher ist

$$Z_{max}^e = \frac{aW_e}{b} \text{ oder } \frac{a}{b} = \frac{Z_{max}^e}{W_e} \tag{13}$$

Für den Versuchsbehälter mit der Fensterfläche Se ergibt sich bei dem mathematischen Modell (1)

$$\frac{dz}{dt} = az - b\frac{z^2}{W_e} - C\frac{z}{W_e}S_e$$

woraus sich der stationäre Wert $Z_{st}^e$ der Masse des Zooplanktons wie folgt ergibt

$$Z_{st}^e = \frac{aW_e - cS_e}{b} \text{ oder } \frac{c}{b} = \frac{Z_{max}^e - Z_{st}^e}{S_e} \tag{14}$$

Aus (14) und (13) folgt, daß

$$\frac{c}{a} = \frac{W_e}{S_e}\left(1 - \frac{z_{st}^e}{z_{max}^e}\right) \tag{15}$$

In Formel (15) sind We und Se bekannt, und die Größen $Z_{st}$ und $Z_{max}$ werden durch Beobachtung bestimmt. Der optimale Radius $R_{opt}$ des Behälters ergibt sich aus (9)

$$R_{opt} = 4\frac{c}{a}$$

und unter Berücksichtigung von (15)

$$R_{opt} = 4\frac{W_e}{S_e}\left(1 - \frac{z_{st}^e}{z_{max}^e}\right)$$

Da $W_e = \pi R_e^2 H_e$ und $S_e = 2\pi R_e h_e$ folgt

$$R_{opt} = 2R_e\frac{H_e}{h_e}\left(1 - \frac{z_{st}^e}{z_{max}^e}\right) \tag{16}$$

Der optimale Wert der Höhe h des "Fensters" für einen zylindrischen Behälter mit unveränderlichem Radius R der Grundfläche und einer Höhe H kann gemäß (11) und (16) berechnet werden nach der Formel:

$$h_{opt} = H\frac{R}{R_{opt}} = H\frac{Rh_e}{2R_eH_e} \cdot \frac{z_{max}^e}{(z_{max}^e - z_{st}^e)} \tag{17}$$

Wenn die Abmessungen des Versuchsbehälters mit denen des Arbeitsbehälters übereinstimmen, d.h. $H_e = H$ und $R_e = R$ (jedoch $h_e \neq h_{opt}$), so folgt aus (17)

$$h_{opt} = \frac{h_e}{2(1 - z_{st}^e/z_{max}^e)} \tag{18}$$

Wenn die Versuchsergebnisse zeigen, daß

$$\frac{z^e_{st}}{z^e_{max}} = \frac{1}{2}$$

so bedeutet dies gemäß (8), daß $h_e$ optimal gewählt ist. Dabei folgt aus (18), daß $h_{opt} = h_e$ .

Zwei Ausführungsbeispiele der Erfindung sind in der Zeichnung dargestellt und werden nachfolgend näher erläutert. Es zeigt:

Fig. 1 eine schematische perspektivische Darstellung eines als Reservat für Zooplankton dienenden Behälters, und

Fig. 2 eine abgewandelte Ausführungsform eines Behälters.

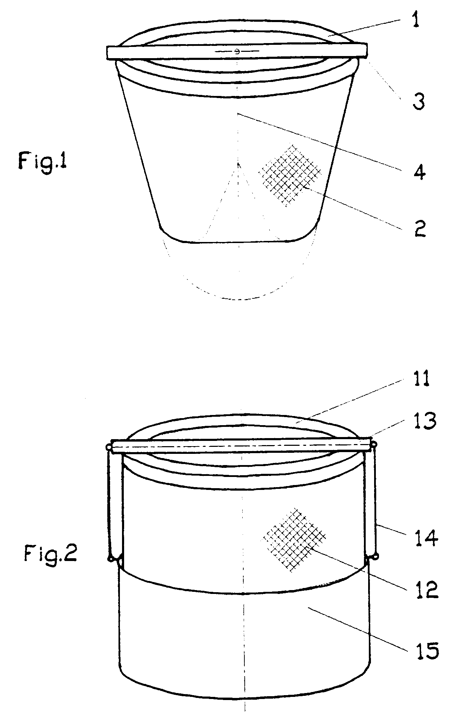

Der in Fig. 1 gezeigte Behälter besteht aus einem ringförmigen Auftriebskörper 1, an dem ein sackartiges Netz 2 befestigt ist. Das sackartige Netz 2 sollte eine Höhe von 1,5 bis 2 m haben, damit es den üblichen Lebensraum des Zooplanktons erfaßt, wenn der Behälter in ein Gewässer eingesetzt wird. Das Netz 2 hat Maschen mit einer Größe oder Weite von 1,5 bis 2 mm, so daß es für Zooplankton durchlässig, für zooplanktonfressende Lebewesen hingegen undurchlässig ist. Wenn der Behälter in ein Gewässer eingesetzt ist, dann begrenzt das Netz 2 somit ein Reservat für das Zooplankton, das vor den in dem Gewässer lebenden zooplanktonfressenden Lebewesen, wie z.B. Jungfische, Insektenlarven und kleine Fische geschützt ist. Andererseits kann das Zooplankton, beispielsweise Daphnien und Kleintiere durch die Maschen des Netzes 2 in das umgebende Gewässer entweichen. Umgekehrt können die in dem Gewässer enthaltenen Blaualgen und Blaugrünalgen, die als Nahrung für das Zooplankton dienen, durch die Maschen des Netzes 2 in das Innere des Behälters gelangen. Um zu verhindern, daß zooplanktonfressende Lebewesen bei starken Wellen von oben in den Behälter gelangen, kann dem Auftriebskörper 1 ein (nicht gezeigter) Deckel zugeordnet sein, der zumindest für zooplanktonfressende Lebewesen undurchlässig ist.

Wie dies vorstehend erläutert wurde, ist es für ein optimales Wachstum des Zooplanktons wesentlich, daß ein bestimmtes Verhältnis zwischen dem Volumen des sackartigen Netzes 2 und dessen Oberfläche eingehalten wird. Damit sich das gewünschte Verhältnis mit einem Standardbehälter mit einheitlichen Ahmessungen erzielen läßt, ist der ringförmige Auftriebskörper 1 mit einem Querholm 3 versehen, an dem das sackartige Netz mit einer Schnur 4 aufgehängt ist. Wenn diese Schnur 4 verkürzt wird, dann wird das sackartige Netz 2 nach oben gezogen, so daß sein Volumen bei unveränderter Oberfläche verkleinert wird. Wenn die Schnur 4 völlig entspannt wird, dann nimmt das Netz 2 seine mit strichpunktierten Linien dargestellte Form an, in der das Volumen des Behälters seinen maximalen Wert erreicht.

In Fig. 2 ist ein abgewandelter Behälter für Zooplankton gezeigt, der ebenfalls einen ringförmigen Auftriebskörper 11 aufweist, an dem ein zylinderförmiges Gitter 12 befestigt ist, das mit einem (nicht gezeigten) Boden geschlossen ist. Das Gitter 12 hat eine Höhe von 1,5 bis 2 m. Die Maschenweite des Gitters 12 beträgt 1 bis 1,5 mm, so daß es für Zooplankton durchlässig, für zooplanktonfressende Lebewesen hingegen undurchlässig ist. Auch bei dieser Ausführungsform sind Vorkehrungen getroffen, die es ermöglichen, das Verhältnis zwischen dem Volumen des Behälters und der Größe seiner für Zooplankton durchlässigen Oberfläche den jeweiligen Bedingungen anzupassen. Zu diesem Zweck ist dem Behälter ein zylindrischer Überzug oder Mantel 15 zugeordnet, der zumindest für Zooplankton undurchlässig ist. Dieser Überzug oder Mantel 15 ist mit Schnüren 14 an einem Querholm 13 des ringförmigen Auftriebskörpers 11 aufgehängt. Durch Verkürzen der Schnüre 14 kann der Mantel 15 auf dem zylindrischen Gitter 12 nach oben verschoben werden, wodurch dieses zunehmend verdeckt und die für das Zooplankton durchlässige Fläche verkleinert wird, das Volumen des Behälters hingegen unverändert bleibt.

**Patentansprüche**

1. Verfahren zur biologischen Reinigung eines Gewässers, dadurch **gekennzeichnet**, daß ein Teilvolumen des Gewässers zur Bildung eines Reservats für Zooplankton vom Hauptvolumen des Gewässers abgegrenzt wird, wobei die das Teilvolumen umschließende Begrenzungswand für zooplanktonfressende Lebewesen undurchlässig, für Zooplankton jedoch zumindest teilweise durchlässig ist.

2. Verfahren nach Anspruch 1, dadurch **gekennzeichnet**, daß das von dem Teilvolumen des Gewässers gebildete Reservat in einer solchen Tiefe des Gewässers angeordnet wird, in der die Vermehrungsaktivität des Zooplanktons am größten ist.

**3.** Vorrichtung zur biologischen Reinigung eines Gewässers, **gekennzeichnet** durch einen ein Reservat für Zooplankton begrenzenden Behälter (1, 2; 11, 12), dessen Wände für zooplanktonfressende Lebewesen undurchlässig, für Zooplankton jedoch zumindest teilweise durchlässig sind.

**4.** Vorrichtung nach Anspruch 3, dadurch **gekennzeichnet**, daß die semipermeablen Teile der Wände des Behälters aus einem Netz oder Gitter (2; 12) bestehen, dessen Maschenweite kleiner ist als die durchschnittliche Größe zooplanktonfressender Lebewesen, aber größer ist als die durchschnittliche Größe der Individuen des Zooplanktons.

**5.** Vorrichtung nach Anspruch 4, dadurch **gekennzeichnet**, daß das Netz oder Gitter (2; 12) eine Maschenweite von 1 bis 1,5 mm hat.

**6.** Vorrichtung nach Anspruch 4 oder 5, dadurch **gekennzeichnet**, daß das Verhältnis zwischen dem Volumen des Behälters und der semipermeablen Fläche seiner Wände variabel ist.

**7.** Vorrichtung nach Anspruch 6, dadurch **gekennzeichnet**, daß die Fläche der semipermeablen Wände des Behälters variabel ist.

**8.** Vorrichtung nach Anspruch 6, dadurch **gekennzeichnet**, daß der Behälter aus einem sackartigen Netz (2) besteht, das an einem Auftriebskörper (1) befestigt ist und dessen Raumform veränderbar ist.

**9.** Vorrichtung nach Anspruch 7, dadurch **gekennzeichnet**, daß der Behälter aus einem Korb (12) mit Wänden aus Maschenmaterial besteht, der mit einem für das Zooplankton undurchlässigen Überzug (15) versehen ist und mit dem sich die Wände einstellbar verdecken lassen.

## Claims

**1.** A process for the biological purification of an expanse of water, **characterised in that** a partial volume of the expanse of water is separated from the main volume of the expanse of water in order to form a reservoir for zooplankton, wherein the separating wall surrounding the partial volume is impermeable to organisms which feed off zooplankton, but is at least partially permeable to zooplankton.

**2.** A process according to claim 1, **characterised in that** the reservoir formed by the partial volume of the expanse of water is disposed at a depth in the expanse of water in which the reproductive activity of the zooplankton is greatest.

**3.** A device for the biological purification of an expanse of water, **characterised by** a container (1, 2; 11, 12) which delimits a reservoir for zooplankton, the walls of which are impermeable to organisms which feed off zooplankton but are at least partially permeable to zooplankton.

**4.** A device according to claim 3, **characterised in that** the semipermeable parts of the walls of the container consist of a net or grid (2; 12), the mesh aperture of which is smaller than the average size of organisms which feed off zooplankton, but is larger than the average size of individual zooplankton.

**5.** A device according to claim 4, **characterised in that** the net or grid (2; 12) has a mesh aperture from 1 to 1.5 mm.

**6.** A device according to claim 4 or 5, **characterised in that** the ratio between the volume of the container and the semipermeable area of its walls is variable.

**7.** A device according to claim 6, **characterised in that** the area of the semipermeable walls of the container is variable.

**8.** A device according to claim 6, **characterised in that** the container consists of a net (2) in the form of a bag, which is fixed to a float and the three-dimensional shape of which can be altered.

**9.** A device according to claim 7, **characterised in that** the container consists of a cage (12) which has walls of mesh material and which is provided with a coating (15) which is impermeable to zooplankton and with which the walls can be adjustably covered.

**Revendications**

1. Procédé de purification biologique des eaux,
   caractérisé en ce qu'
   un volume partiel de la masse d'eau est délimité pour la formation d'une réserve destinée à du zooplancton, à partir du volume principal de la masse d'eau, tandis que la paroi de la délimitation entourant le volume partiel est étanche pour les êtres vivants se nourrissant de zooplancton, mais cependant au moins partiellement perméable pour du zooplancton.

2. Procédé selon la revendication 1,
   caractérisé en ce que
   la réserve formée par le volume partiel d'eau est disposée à la profondeur de l'eau, dans laquelle l'activité de la multiplication du zooplancton est la plus grande.

3. Dispositif pour la purification biologique d'eaux,
   caractérisé par
   un réservoir délimitant une réserve pour zooplancton (1, 2 ; 11, 12), dont les parois sont imperméables pour des êtres vivants se nourrissant de zooplancton, toutefois sont perméables au moins partiellement pour du zooplancton.

4. Dispositif selon la revendication 3,
   caractérisé en ce que
   les parties semi-perméables des parois du réservoir sont composées d'un filet ou grillage (2; 12), dont la longueur de maille est plus petite que la grandeur moyenne des êtres vivants se nourrissant de zooplancton, mais est plus grande que la taille moyenne des individus du zooplancton.

5. Dispositif selon la revendication 4,
   caractérisé en ce que
   le filet ou grillage (2; 12) a une largeur de maille de 1 à 1,5 mm.

6. Dispositif selon les revendications 4 ou 5,
   caractérisé en ce que
   le rapport entre le volume du réservoir et la surface semi-perméable de ses parois est variable.

7. Dispositif selon la revendication 6,
   caractérisé en ce que
   la surface des parois semi-perméables du réservoir est variable.

8. Dispositif selon la revendication 6,
   caractérisé en ce que
   le réservoir est constitué d'un filet (2) du type sac, qui est fixé à un flotteur (1) et dont la forme dans l'espace peut être modifiée.

9. Dispositif selon la revendication 7,
   caractérisé en ce que
   le réservoir se compose d'un panier (12) avec des parois en matériau en mailles, qui est muni d'un revêtement (15) imperméable au zooplancton et avec lequel on peut recouvrir les parois de manière réglable.

Fig.1

Fig.2